# EUROPEAN PATENT SPECIFICATION

(11) **EP 0 651 553 B1**
(45) Date of publication and mention of the grant of the patent: **02.01.2002**
(21) Application number: 94307949.1
(22) Date of filing: 28.10.1994
(51) Int. Cl.: H04N 1/21, G06K 7/10

(54) **Electronic camera**
Elektronische Kamera
Caméra électronique

(30) Priority: 29.10.1993 JP 27211693
(43) Date of publication of application: 03.05.1995
(73) Proprietor: CANON KABUSHIKI KAISHA, Tokyo (JP)
(72) Inventor: Sakaegi, Yuji, c/o CANON K.K., Ohta-ku, Tokyo (JP)
(74) Representative: Beresford, Keith Denis Lewis

(56) References cited:
- EP-A- 0 323 194
- US-A- 4 500 776
- US-A- 5 039 847
- US-A- 5 237 156
- PATENT ABSTRACTS OF JAPAN vol. 16, no. 204 (E-1202) 15 May 1992 & JP-A-04 032 375 (KYOCERA CORP) 4 February 1992
- PATENT ABSTRACTS OF JAPAN vol. 17, no. 665 (E-1472) 8 December 1993 & JP-A-05 219 430 (FUJI PHOTO FILM CO., LTD.) 27 August 1993

## Description

### BACKGROUND OF THE INVENTION

### Field of the Invention

The present invention relates to an electronic camera.

### Related Background Art

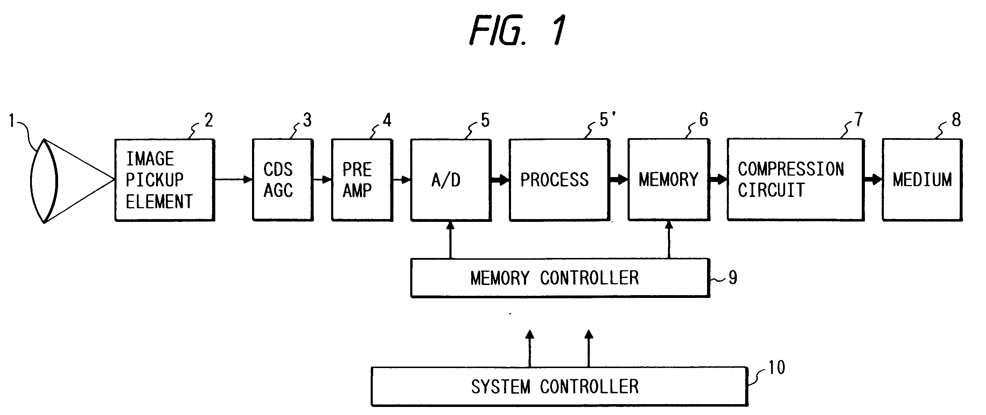

A prior art electronic camera for digital recording is constructed as shown in Fig. 1.

In Fig. 1, an image through an optical lens 1 is picked up by an image pick-up device and processed for CDS or AGC by a circuit 3 and amplified to a predetermined level by a pre-amplifier circuit 4. Then, it passed through an A/D conversion circuit 5 and a processing circuit 5' and is temporarily stored in a memory 6. It is compressed by a compression circuit 7 before it is recorded on a medium 8. Numeral 9 denotes a memory controller and numeral 10 denotes a system controller.

The electronic camera of this construction is sufficient to "photograph" an image but has a limitation as an apparatus for acquiring further information. Namely, since it does not accompany information as to detailed information of the "photograph", memory or memorandum of a photographer is required when the "photograph" is to be subsequently processed or edited, which significantly reduces the efficiency.

In such a prior art electronic camera, camera processes controlled by the system controller are fixed in ROM as firmware, and the manner in which the camera records is predetermined when it is manufactured in a plant so that the camera cannot meet different types of requirements.

### SUMMARY OF THE INVENTION

It is a concern of the present invention to alleviate the problems encountered in the prior art electronic camera.

US Patent Specification No. US-A-5039847 discloses an apparatus capable of reading and processing both character data and image data using a single scanner so that image data and information obtained by image recognition can be stored separately or together.

According to the present invention, there is provided an electronic camera as set out in claim 1.

An embodiment of the present invention allows information other than 'photograph' to be accompanied in an image file and the generation of various sorts of information without fixing a generation method of the information on firmware.

Thus, the information describing the image such as merchandise management information represented by a bar code or title and names derived by character recognition can be easily linked to a target image so that the apparatus is very useful as an input device for later retrieving or information-managing the image.

Other concerns and features of the present invention will be apparent from the following description of the invention and the accompanying drawings.

### BRIEF DESCRIPTION OF THE DRAWINGS

Fig. 1 shows a configuration of a prior art electronic camera.

Fig. 2 shows a block diagram of an embodiment of the present invention,

Fig. 3 shows a flow chart of a setting program on a PC,

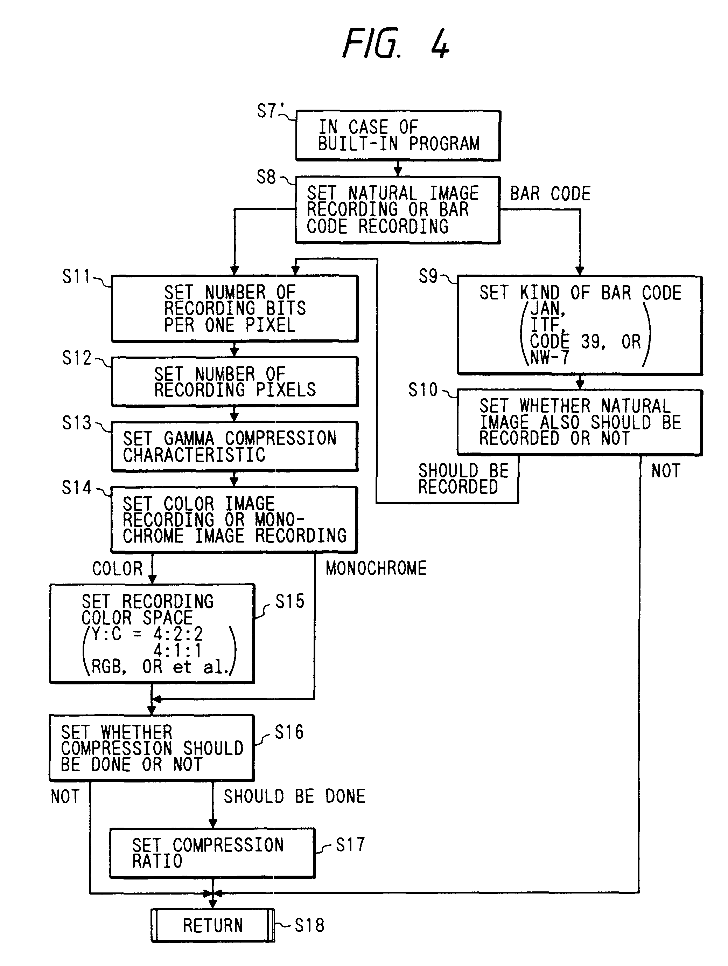

Fig. 4 shows a flow chart continued from Fig. 3,

Fig. 5 shows a flow chart continued from Fig. 4,

Fig. 6 illustrates a display state,

Fig. 7, comprising Figs. 7A and 7B, shows a flow chart of an operation at camera release,

Fig. 8 shows a flow chart continued from Fig. 7, and

Fig. 9 shows a flow chart of an external program.

### DETAILED DESCRIPTION OF THE PREFERRED EMBODIMENTS

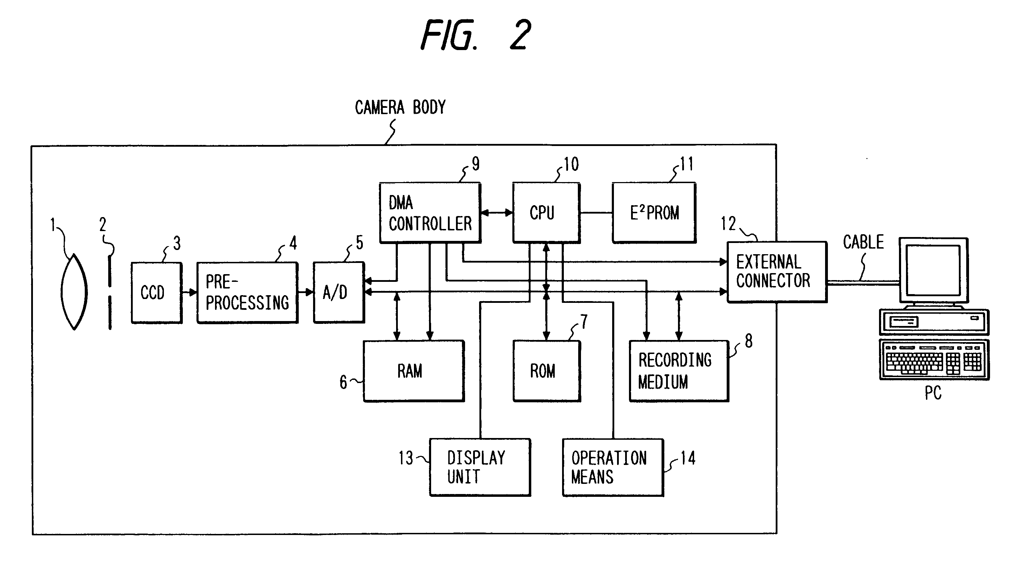

Fig. 2 shows a first embodiment, in which numeral 1 denotes an optical system for focusing an optical image of an object to be picked up, numeral 2 denotes a diaphragm/shutter for attaining proper exposure, numeral 3 denotes a CCD for converting the focused optical image to an electrical signal, numeral 4 denotes a pre-processing circuit for correcting and amplifying an output from the CCD, numeral 5 denotes an AD converter for converting a video signal to a digital signal, numeral 6 denotes a writable electric memory, numeral 7 denotes a read-only memory, numeral 8 denotes a recording medium for recording the video signal thereon, numeral 9 denotes a direct memory access (DMA) controller for transferring the digital data, numeral 10 denotes a CPU for controlling the system and for processing the image data, numeral 11 denotes a writable non-volatile memory, numeral 12 denotes an external connector for exchanging information with the exterior, numeral 13 denotes a display for displaying an operation state of the camera to a user, and numeral 14 denotes a console unit for entering an instruction from the user.

When the camera of the present embodiment is used, the user first sets the operation thereof.

In setting, the external connector 12 is connected with a personal computer through a cable (hereinafter referred to as PC) and the setting is made by using a setting program on the PC.

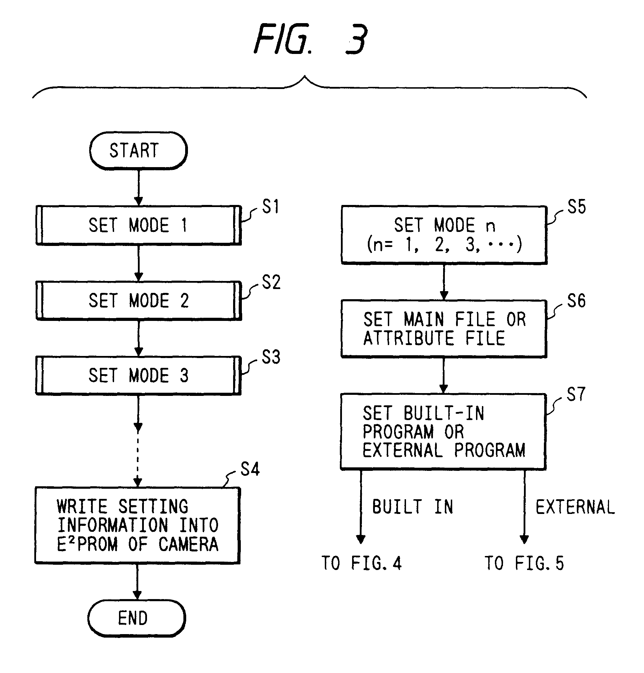

Fig. 3 shows a flow chart of the setting program on the PC.

By using this program, the operation mode of the camera of the present invention is sequentially set starting from a mode 1 (S1).

Whether a result of the process in that mode (S5) is a main file (image file) or an attribute file is set (S6).

Whether a program for carrying out the operation mode is built in the camera or an external program is set (S7), and if it is built in (S7'), whether it is a natural image record or a bar code record is set (S8), and if it is the bar code record, a type of the bar code such as JAN code, Code 39 or NW-7 is determined (S9). Whether the natural image is also to be recorded or not is set (S10), if it is the natural image record in S8, the number of recording bits per pixel is set (S11). The number of recording pixels (S12), a gamma compression characteristic, whether it is a color image or a monochromatic image, if it is the color image, color spaces for recording (Y:C₁:C₂ = 4:2:2 or 4:1:1 or RGB) are set (S15). Then, in S16, whether it is to be compressed or not is set, and when it is to be compressed, a compression factor is set in S17 and the process returns (S18).

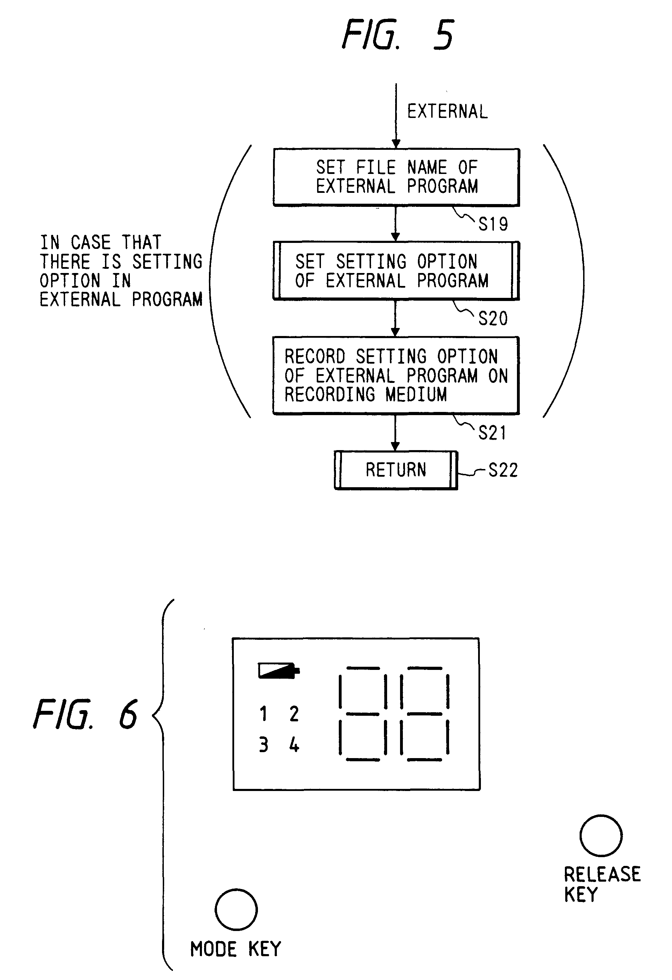

In S7, if it is the external program, a file name of the external program is set (S19) as shown in Fig. 5, and if the external program requires a setting option, the option of the external program is set (S20). Then, in S21, the setting option of the external program is recorded on the recording medium and the process returns at S22.

After the settings of the routine of the operation mode 1 have been done, the settings for the operation modes 2, 3, ... are done (S2, S3).

After the setting of the operation modes 1, 2, 3, ... have been done, the setting program on the PC communicates with the camera of the present invention through the cable to write the setting information in the EEPROM in the camera. Then, the operation is terminated.

Then, the user manipulates console buttons of the camera of the present invention to instruct the operation mode of the camera.

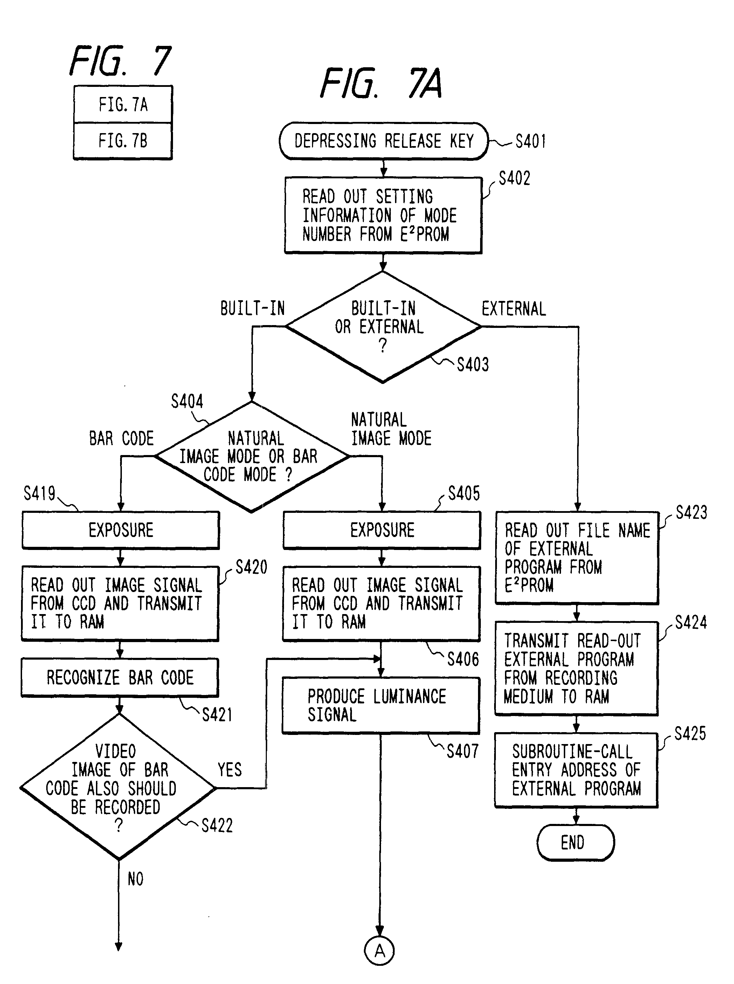

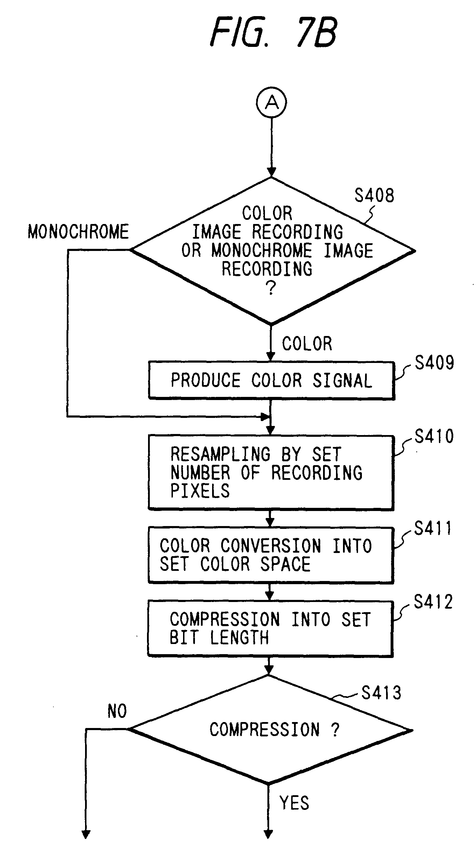

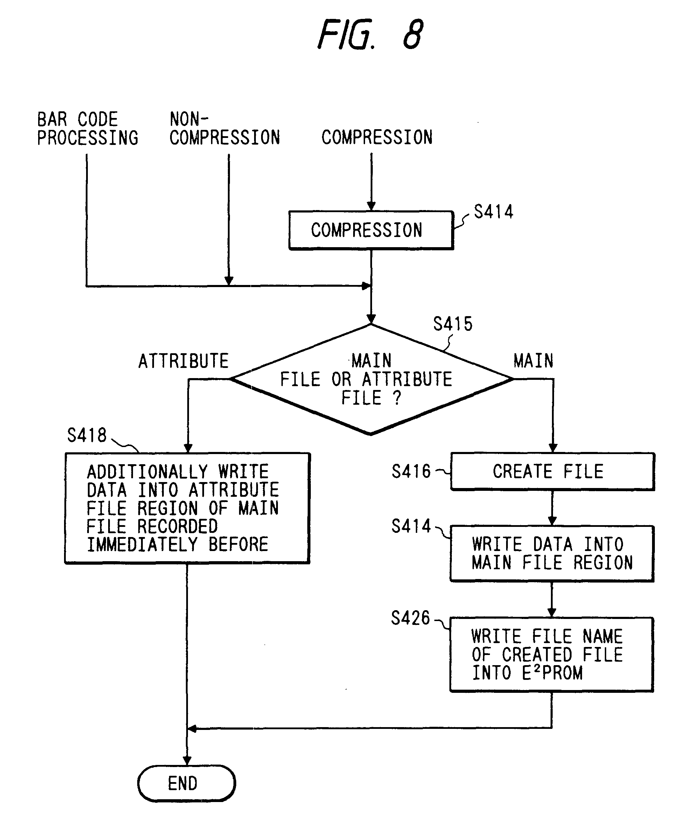

Fig. 6 shows manipulation buttons and an LCD display panel of the camera. Figs. 7A, 7B and 8 show flow charts of a camera release operation.

Each time the user depresses a mode button, segments "1", "2", "3" and "4" indicating operation modes are sequentially turned on the LCD panel. The user depresses the mode button until a desired operation mode number is turned on to select the operation mode.

When the user depresses the release button (S401) after he/she has set the operation mode, the camera reads out the setting information of the operation mode previously set in the EEPROM (S402) and proceeds the process in accordance with the setting information.

If it is the built-in mode in S403 and the natural image record in S404, built-in program in the ROM will be executed and the signal read from the CCD is processed in accordance with the subsequent setting contents (the number of record pixels, the number of record bits, the compression or non-compression and the compression factor) (S405 - S414).

In S405, the exposure is made to the CCD, and in S406, the image signal is read out of the CCD and it is transferred to the RAM. Then, in S407, a brilliance signal is generated, and in S408, whether it is a color image or a monochromatic image is determined, and if it is the color image, a chrominance signal is generated and the process proceeds to S310. If it is the monochromatic image in S408, the process directly proceeds to S410. In S410, resampling is made by the preset number of record pixels, and in S411, color conversion to the preset color space is made in S412, the signal is compressed to the preset bit length. If the presence of the compression is determined in S413, the compression is made in S414 and the process proceeds to S415. If the absence of the compression is determined in S413, the process directly proceeds to S415.

If it is the bar code record mode in S404, the signal read from the CCD is processed for the bar code recognition (S419 - S422) according to built-in program code on the ROM.

In S419, the exposure is made to the CCD, and in S420, the image signal is read from the CCD and it is transferred to the RAM. In S421, the bar code recognition is made and in S422, whether the bar code is to be recorded as the video information or not is determined. If YES, the process proceeds to S407. If NO, the process directly proceeds to S415.

Various methods for recording the natural image and recognizing the bar code have been proposed and known, and they are not discussed in detail herein.

If it is the external mode in S403, a file name of the external program is read from the EEPROM (S423) and the program of that file name is read from the recording medium and transferred to the DRAM (S424), and an entry address of the program is sub-routine called (S425) to shift the control to the program.

A setting file of the external program to be executed is further read from the recording medium as required. When the execution of the external program is completed, the return command of the sub-routine is executed to return the control to the camera.

Finally, when it is determined that it is the main file (S415), the camera records the information processed by the image pick-up on the recording medium as it is, and writes the file name in the EEPROM (S416, S417 and S426).

In S416, the file number or file name is automatically generated, and in S414, the image data is written into the file. In S426, the file number or file name is written into the EEPROM.

If it is set as the attribute file, it is recorded in the attribute area of the main file recorded in S426 (S418).

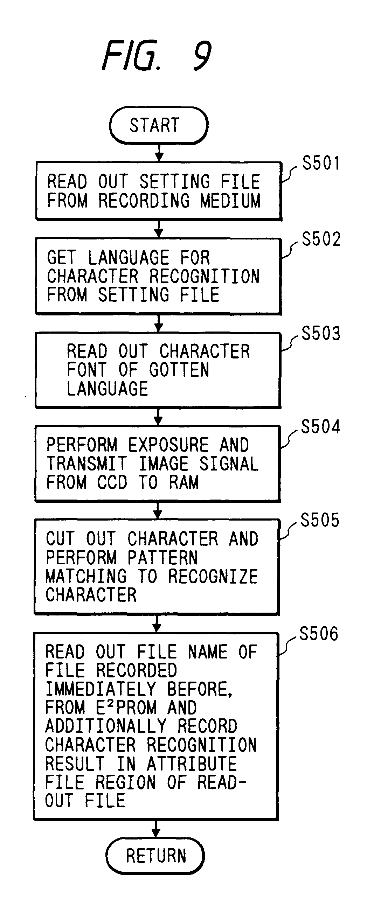

Fig. 9 shows a flow chart of the external program.

It is a character recognition program.

First, a preset setting file is read from the recording medium (S501). The setting file includes the information preset by the setting program on the PC. Setting information of a language to be character-recognized is acquired (S502) and a file of font used in that language is read from the recording medium (S503).

Then, the exposure is made and the image signal is transferred from the CCD to the RAM (S504) and the characters are extracted and pattern-matched (S505) and the characters are recognized and converted to the ASCII code, for example.

The file name of the file recorded immediately before is read from the EEPROM (which was written in S426) and the recognized character code is additionally recorded in the attribute area of the file.

In accordance with the present embodiment, the retrieval and management of the image file after the image pick-up are facilitated.

## Claims

1. An electronic camera comprising:
image pickup means (1,2,3) for receiving light from an image and outputting an image signal corresponding thereto; and
a connector (12) for receiving from an external source both information for setting a camera mode and for setting a character recognition program;
a first memory (11) for storing the received camera mode setting information;
a second memory (8) for storing a character recognition program and the corresponding setting information received by said connector and for storing an image signal in a main file area of a main file and for additionally storing a pattern recognised image signal in an attribute file area of the main file;
a third memory (7) for storing a built-in photography mode control program;
a designator (14) for designating either a photography mode or a character recognition mode of operation of the camera; and
signal processing circuitry (1,10) for processing the image signal output from said image pickup means as a photograph in accordance with the camera mode setting information stored in said first memory and the built-in photography mode control program stored in said third memory and for storing the processed image signal in the main file area of the main file in the second memory when said designating means designates the photography mode, and for processing the image signal output from said image pickup means as character signal in accordance with the character recognition program and corresponding setting information stored in the second memory and for storing the character recognised image signal as pattern recognised image signal in the attribute file area of the main file in the second memory when said designating means designates the character recognition mode.

2. A camera according to claim 1, wherein said third memory stores a built-in bar code control program, and wherein said designator is adapted to additionally designate a bar code mode, and wherein said signal processing circuitry processes the image signal output from said image pickup means as a bar code signal according to the built-in bar code control program when said designator has designated the bar code mode.

3. A camera according to claim 1 or claim 2, further comprising a RAM (6), and wherein said signal processing circuitry transfers the character recognition program from said second memory to said RAM when said designator designates the character recognition mode.

4. A camera according to any one of claims 1 to 3, further comprising a cable for coupling said connector to a personal computer external source.

## Patentansprüche

1. Elektronische Kamera, mit:
einem Bildaufnahmemittel (1, 2, 3) zum Lichtempfang aus einem Bild und zur Ausgabe eines Bildsignals gemäß dem Bild; und
einem Stecker (12) zum Empfang von sowohl Informationen zum Einstellen eines Kamerabetriebs als auch zum Einstellen eines Zeichenerkennungsprogramms aus einer externen Quelle;
einem ersten Speicher (11), der die empfangenen Informationen zum Einstellen des Kamerabetriebs speichert;
einem zweiten Speicher (8), der ein Zeichenerkennungsprogramm und die über den Stecker empfangene zugehörige Informationen zum Einstellen, ein Bildsignal im Bereich einer Hauptdatei und zusätzlich ein mustererkennendes Bildsignal in einem Eigenschaftsdateibereich der Hauptdatei speichert;
einem dritten Speicher (7), der ein residentes Fotografiermodus-Steuerprogramm speichert;
einer Bestimmeinrichtung (14), die entweder einen Fotografiermodus oder einen Zeichenerkennungsmodus des Kamerabetriebs bestimmt; und mit
einer Signalverarbeitungsschaltung (1, 10), die das Bildsignal verarbeitet, die das Bildaufnahmemittel wie ein Fotograf gemäß der im ersten Speicher gespeicherten Kamerabetriebsart-Einstellinformation und das im dritten Speicher gespeicherte residente Fotografiermodus-Steuerprogramm und das verarbeitete Bildsignal im Hauptdateibereich der Hauptdatei im zweiten Speicher ausgibt, wenn die Bestimmeinrichtung den Fotografiermodus bestimmt, und zur Verarbeitung des vom Bildaufnahmemittel ausgegebenen Bildsignals als Zeichensignal gemäß dem Zeichenerkennungsprogramm und gemäß der im zweiten Speicher gespeicherten Einstellinformation und zum Speichern des als Muster erkannten Bildsignals im Eigenschaftsdateibereich der Hauptdatei im zweiten Speicher, wenn die Bestimmeinrichtung den Zeichenerkennungsmodus vorgibt.

2. Kamera nach Anspruch 1, deren dritter Speicher ein residentes Balkencodesteuerprogramm speichert und deren Bestimmeinrichtung eingerichtet ist, zusätzlich einen Balkencodemodus vorzugeben, und deren Verarbeitungsschaltung das vom Bildaufnahmemittel ausgegebene Bildsignal als ein Balkencodesignal verarbeitet, wenn die Bestimmeinrichtung gemäß dem residenten Balkencodesteuerprogramm den Balkencodemodus bestimmt hat.

3. Kamera nach Anspruch 1 oder 2, des weiteren ausgerüstet mit einem RAM (6), deren Signalverarbeitungsschaltung das Zeichenerkennungsprogramm aus dem zweiten Speicher in das RAM überträgt, wenn die Bestimmeinrichtung den Zeichenerkennungsmodus vorgibt.

4. Kamera nach Anspruch 1 bis 3, des weiteren ausgerüstet mit einem Kabel, das den Stecker mit der externen Quelle in Form eines Personal Computers verbindet.

## Revendications

1. Appareil photo électronique comprenant :
un moyen (1, 2, 3) de saisie d'image destiné à recevoir de la lumière provenant d'une image et à sortir un signal d'image qui y correspond ; et
un connecteur (12) destiné à recevoir, d'une source externe, à la fois de l'information destinée à établir un mode d'appareil photo et à établir un programme de reconnaissance de caractères ;
une première mémoire (11) destinée à mémoriser l'information reçue d'établissement de mode d'appareil photo ;
une deuxième mémoire (8) destinée à mémoriser un programme de reconnaissance de caractères et l'information d'établissement correspondante reçus par ledit connecteur, et à mémoriser un signal d'image dans une zone de fichier principal d'un fichier principal et à, en plus, mémoriser un signal d'image reconnu de dessin dans une zone de fichier d'attributs du fichier principal ;
une troisième mémoire (7) destinée à mémoriser un programme incorporé de commande de mode photographie ;
un désignateur (14) destiné à désigner soit un mode photographie soit un mode reconnaissance de caractères de fonctionnement de l'appareil photo ; et
des circuits (1, 10) de traitement de signal destinés à traiter le signal d'image provenant dudit moyen de saisie d'image comme une photographie d'après l'information d'établissement de mode d'appareil photo mémorisée dans ladite première mémoire et le programme incorporé de commande de mode photographie mémorisé dans ladite troisième mémoire et à mémoriser le signal d'image traité dans la zone de fichier principal du fichier principal dans la deuxième mémoire, lorsque ledit moyen de désignation désigne le mode photographie, et à traiter le signal d'image sorti dudit moyen de saisie d'image comme un signal de caractères d'après le programme de reconnaissance de caractères et l'information d'établissement correspondante mémorisée dans la deuxième mémoire et à mémoriser le signal d'image de caractères reconnu comme signal d'image reconnu de dessin dans la zone de fichier d'attributs du fichier principal dans la deuxième mémoire, lorsque ledit moyen de désignation désigne le mode reconnaissance de caractères.

2. Appareil photo selon la revendication 1, dans lequel ladite troisième mémoire mémorise un programme incorporé de commande de code à barres, et dans lequel ledit désignateur est apte à désigner en plus un mode code à barres, et dans lequel lesdits circuits de traitement de signal traitent le signal d'image sorti dudit moyen de saisie d'image comme un signal de code à barres d'après le programme incorporé de commande de code à barres lorsque ledit désignateur a désigné le mode code à barres.

3. Appareil photo selon la revendication 1 ou la revendication 2, comprenant en outre une RAM (mémoire vive) (6), et dans lequel lesdits circuits de traitement de signal transfèrent le programme de reconnaissance de caractères de ladite deuxième mémoire à ladite RAM lorsque ledit désignateur désigne le mode reconnaissance de caractères.

4. Appareil photo selon l'une quelconque des revendications 1 à 3, comprenant en outre un câble destiné à raccorder ledit connecteur à une source externe d'ordinateur personnel.
